# EUROPEAN PATENT APPLICATION

(11) **EP 2 730 988 A2**
(43) Date of publication of application: **14.05.2014**
(21) Application number: 13191970.6
(22) Date of filing: 07.11.2013
(51) Int. Cl.: G05B 19/418

(54) **Systems and methods for segment synchronization**

(30) Priority: 08.11.2012 US 201213672618
(71) Applicant: General Electric Company, Schenectady, New York 12345 (US)
(72) Inventor: Petzen, John, Salem, VA 24153 (US); Pettigrew, William, Salem, VA 24153 (US); Galt, William, Salem, VA 24153 (US)
(74) Representative: Illingworth-Law, William Illingworth

(57) **Abstract**

The embodiments described herein include systems and methods for synchronized execution of macrocycles of similar duration across communications segments 52 of a control system 10. Such synchronized execution approach enables a reduced control system 10 response time by increasing the predictability of execution timing of one segment with regards to alternative segments. Thus, the control system may be able to more accurately and precisely provide control functionality

## Description

### BACKGROUND OF THE INVENTION

The subject matter disclosed herein relates to control systems, and more specifically, to synchronizing execution of control across segments of the control system.

Certain systems, such as industrial control systems, may provide for control capabilities that enable the execution of computer instructions in various types of devices, such as sensors, pumps, valves, and the like. For example, a communications bus may be used to send and receive signals to the various devices. Each device may issue inputs and/or outputs related to the device conditions and/or control logic and transmit them over the communications bus. The input and/or output information may be received by a number of interested entities, including components on alternative segments of the communications bus. However, such communications across the alternative segments may be unsynchronized, thus presenting unpredictability as to the timing relationship between the sending and/or receiving of signals across alternative segments. Accordingly, the control system response time may include increased latency, resulting in less stable control in the control system.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, an industrial process control system includes a first link active scheduler configured to operate on a first communications segment while a second link active schedule operates on a second communications segment. The first link active scheduler is configured to schedule a first access time on the first communications segment approximately the same as a second access time on the second communications segment. The first access time relates to a first field device on the first communications segment of the industrial process control system and the second access time relates to a second field device on the second communications segment of the industrial process control system.

In a second embodiment, a method includes obtaining, via a processor of a device on a first communications segment of an industrial control system, a reference time. The method further includes determining, via the processor, a first macrocycle duration of the first communications segment and scheduling, via the processor, a first macrocycle execution time for a first macrocycle on the first communications segment. The first macrocycle execution time is approximately the same as other macrocycle execution times on other communications segments of the industrial control system when macrocycle durations of the other communications segments are approximately equal to the first macrocycle duration.

In a third embodiment, a non-transitory tangible computer-readable medium includes executable code. The executable code includes instructions for synchronizing macrocycle execution times across multiple communications segments of an industrial process control system based upon common macrocycle durations of each of the multiple communications segments.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system, including a communications bus;
FIG. 2 is a block diagram including embodiments of various components of the industrial control system of FIG. 1;
FIG. 3 is a flow chart of an embodiment of a process useful for synchronizing macrocycle execution across H1 segments;
FIG. 4 is a block diagram of the control system of FIG. 1, incorporating the process of FIG. 3; and
FIG. 5 illustrates a macrocycle of a device on a communications segment.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

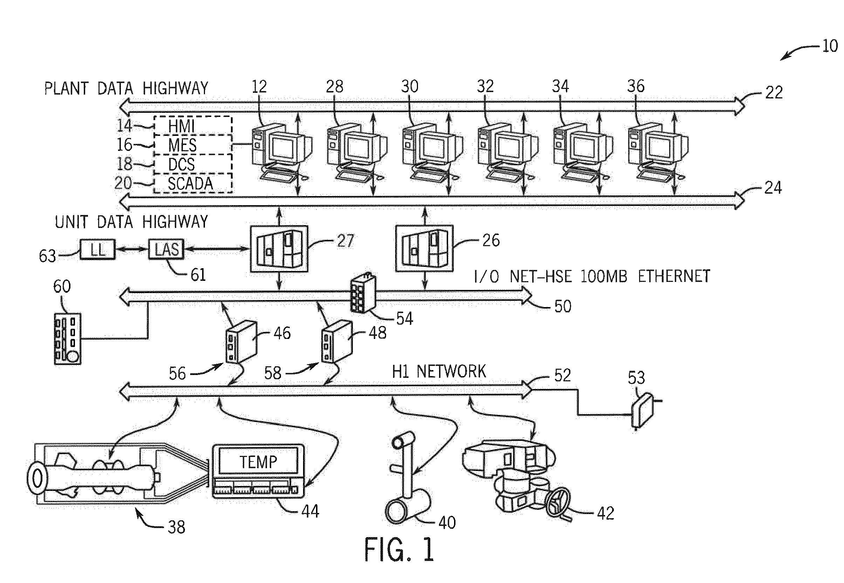

Industrial control systems may include controller systems suitable for interfacing with a variety of field devices, such as sensors, pumps, valves, and the like. For example, sensors may provide inputs to the controller system, and the controller system may then derive certain actions in response to the inputs, such as actuating the valves, driving the pumps, and so on. In certain controller systems, such as the Mark™ VIe controller system, available from General Electric Co., of Schenectady, New York, multiple field devices may be communicatively coupled to and controlled by a controller. Indeed, multiple controllers may be controlling multiple field devices, as described in more detail with respect to FIG. 1 below. The devices communicatively connected to the controller may include field devices, such as Fieldbus Foundation devices, that include support for the Foundation H1 bi-directional communications protocol. Accordingly, the devices may be communicatively connected with the controller in various communication segments, such as H1 segments, attached to linking devices, to enable a plant-wide network of devices.

Each field device may include computer instructions or control logic encapsulated in function blocks. For example, a proportional-integral-derivative (PID) function block may include PID instructions suitable for implementing a closed-loop control of certain processes, such as industrial processes. Likewise, an Analog Input (AI) function block and an Analog Output (AO) function block may be used to retrieve input data and to submit output data, respectively. Indeed, various types of function blocks may be provided that can include a variety of computer instructions or control logic, as described in more detail below with respect to FIG. 1. The field device may then execute the computer instructions or control logic in the function block. For example, in one implementation cycle, the AI function block's execution may occur first. Then the PID block may occur, accepting the AI block's output as an input. Upon completion of the PID block logic, PID control output may be received by the AO function block where additional output data may be published. A "macrocycle," as discussed herein, may refer to a cycle of scheduled function block execution, scheduled communication time, and a portion of time reserved for asynchronous communications (e.g., alerts and/or downloads) by devices on a communications segment (e.g., an H1 segment).

Once the field devices are attached and commissioned (i.e., configured to communicate with other entities in a network), the field devices may provide a variety of information (e.g., status, alarm, and event information) to interested entities. For example, alarm viewers, redundant (i.e., backup) controllers, and others may receive alert information or other information regarding the field devices. Based upon this information, the control system may cause changes (e.g., may control) various settings or conditions of the control system. However, because these field devices may be connected to the communications bus via alternative communications segments, these macrocycle execution timings may be unsynchronized, causing an unpredictability as to when each macrocycle will execute with respect to executions on other communications segments. Thus, the control system response time may be greatly reduced, causing less stability in control of the control system.

Embodiments described herein enable synchronization of macrocycle execution across the multitude of segments of the control system. That is, timing signals from a controller of the control system are provided to a link active scheduler (LAS). Each LAS will start corresponding macrocycles at the same time as every other LAS with corresponding macrocycles that have the same configured macrocycle duration in the control system. Such a synchronized execution enables more predictability in relative timing of execution, enabling faster response times and more stable control of the control system.

With the foregoing in mind, FIG. 1 depicts an embodiment of an industrial process control system 10. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControlST™ software, available from General Electric Co., of Schenectday, New York.

Further, the computer 12 is communicatively connected to a plant data highway 22 suitable for enabling communication between the depicted computer 12 and other computers 12 in the plant. Indeed, the industrial control system 10 may include multiple computers 12 interconnected through the plant data highway 22. The computer 12 may be further communicatively connected to a unit data highway 24, suitable for communicatively coupling the computer 12 to industrial controllers 26 and 27, which may act in tandem and/or provide controller redundancy for one another. The system 10 may include other computers coupled to the plant data highway 22 and/or the unit data highway 24. For example, embodiments of the system 10 may include a computer 28 that executes a virtual controller, a computer 30 that hosts an Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. Other computers coupled to the plant data highway 22 and/or the unit data highway 24 may include computers hosting Cimplicity®, ControlST™, and ToolboxST™, available from General Electric Co., of Schenectady, New York.

The system 10 may include any number and suitable configuration of industrial controllers 26 and 27. For example, in some embodiments the system 10 may include one industrial controller 26, or two (e.g., 26 and 27), three, or more industrial controllers 26 for redundancy. The industrial controllers 26 and 27 may enable control logic useful in automating a variety of plant equipment, such as a turbine system 38, a valve 40, and a pump 42. Indeed, the industrial controllers 26 and 27 may communicate with a variety of devices, including but not limited to temperature sensors 44, flow meters, pH sensors, temperature sensors, vibration sensors, clearance sensors (e.g., measuring distances between a rotating component and a stationary component), and pressure sensors. The industrial controller may further communicate with electric actuators, switches (e.g., Hall switches, solenoid switches, relay switches, limit switches), gasifiers, gas treatment units (e.g., acid gas removal units), air separation units, compressors, steam turbines, gas turbines, heat recovery steam generators, and so forth.

In the depicted embodiment, the turbine system 38, the valve 40, the pump 42, and the temperature sensor 44 are communicatively interlinked to the automation controller 26 and 27 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as the industrial controllers 26 and 27, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controllers 26, 27 and to the computer 12. For example, the devices, such as the turbine system 38, the valve 40, the pump 42, and the temperature sensor 44, may include industrial devices, such as Fieldbus Foundation devices that include support for the Foundation H1 bi-directional communications protocol. In such an embodiment, a Fieldbus Foundation power supply 53, such as a Phoenix Contact Fieldbus Power Supply available from Phoenix Contact of Middletown, PA, may also be coupled to the H1 network 52 and may be coupled to a power source, such as AC or DC power. The power supply 53 may be suitable for providing power to the devices 38, 40, 42, and 44, as well as for enabling communications between the devices 38, 40, 42, and 44. Advantageously, the H1 network 52 may carry both power and communications signals (e.g., alert signals) over the same wiring, with minimal communicative interference. The devices 38, 40, 42, and 44 may also include support for other communication protocols, such as those included in the HART® Communications Foundation (HCF) protocol, and the Profibus Nutzer Organization e.V. (PNO) protocol.

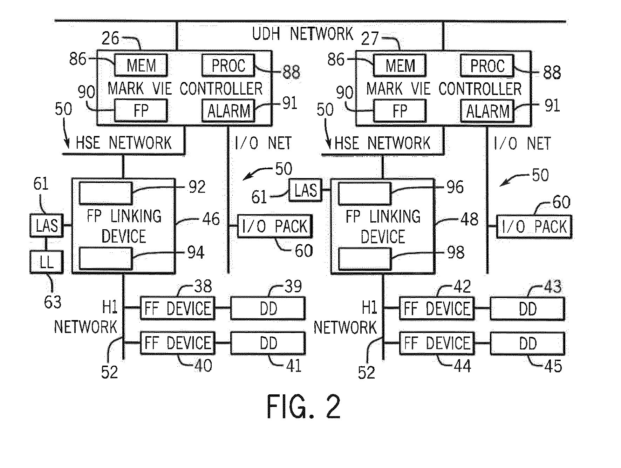

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment, an I/O pack 60 may be coupled to the I/O NET 50. The I/O pack 60 may provide for the attachment of additional sensors and actuators to the system 10. The linking devices 46 and 48 may also provide additional functionality, such as maintaining a link active scheduler (LAS) 61 and a live list 63 of field devices 38, 40, 42, and 44, as described in more detail below with respect to FIG. 2. The live list 63 may be stored on a memory of the linking devices 46 and 48. The live list 63 includes the list of all devices currently communicatively coupled to the system 10.

While the Foundation Fieldbus standard is silent as to synchronization across the multiple H1 segments of a control system, the embodiments described herein may provide for such synchronization. Such synchronization may be useful, for example, because with unsynchronized H1 segments, it may be impossible to predict when each segment will execute with respect to the other segments within the system. Thus, the total system response to a signal from the field by the controller may include unnecessary latency. For example, in some embodiments, the response may take up to approximately 2.5 macrocycles of elapsed time. Such latency may result in an increased system response time that is slower and provides less-stable control than a control system with time synchronization across segments.

For example, in certain embodiments, the devices 38, 40, 42, and 44 may provide data, such as alerts, status, or condition data, to the system 10. Timing synchronization of the provision of this data by the devices 38, 40, 42, and 44 on separate segments may be handled in accordance with the embodiments described below. FIG. 2 depicts a block diagram of an embodiment of the industrial process control system 10 depicting various components in further detail. Multiple controllers, such as the controllers 26 and 27, may be set up for redundant operations. That is, should the controllers 26 become inoperative, the controller 27 may take over and continue operations.

As described above, the controllers 26 and 27 are coupled to the unit data highway 24. The controllers 26 and 27 may each include a memory 86 and a processor 88 for executing the functions of the controllers 26 and 27. In one embodiment, the controllers 26 and 27 may execute a Fieldbus process 90 and an alarm process 91. The Fieldbus process 90 may be used to interface with the field devices 38, 40, 42, and 44. As mentioned above, the controllers 26 and 27 may be coupled to the I/O pack 60 over the I/O NET 50. In one embodiment, the I/O pack 60 may communicate with the controllers 26 and 27 using the advanced digital logic (ADL) protocol.

As also described above, the controllers 26 and 27 may be coupled to linking devices 46 and 48 through an I/O NET 50. The linking devices 46 and 48 may communicate with the controllers 26 and 27 over the I/O NET 50. The linking devices 46 and 48 may be coupled to the H1 network 52, and one linking device 46 may be coupled to devices 38 and 44 and another linking device 48 may be coupled to device 40 and 42. The linking device 46 may include a memory 92, such as volatile and non-volatile memory, and the processor 94, and the linking device 48 may include a memory 96, such as volatile and non-volatile memory, and a processor 98. In one embodiment, the linking devices 46 and 48 may communicate with the controllers 26 and 27 using the Fieldbus Foundation protocol.

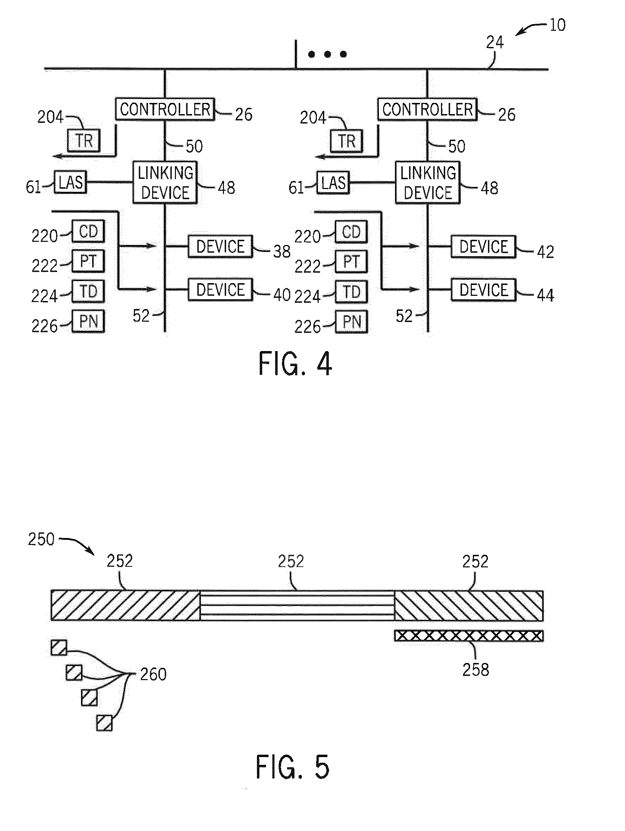

A master linking device, such as the linking device 46, other linking devices (e.g., linking device 48), or any other fieldbus devices may include a LAS 61. The LASs 61 found on these devices may schedule the execution of function blocks (e.g., the AI function blocks, PID, and AO function blocks discussed above) as part of the management of the macrocycle. Additionally, the LASs 61 may periodically issue a token, such as a pass token, to each of the field devices 38, 40, 42, and 44. The field devices 38, 40, 42, and 44 that properly respond to the pass token may be kept in the live list 63. Any field device 38, 40, 42, and 44 not responding to the pass token may be removed from the live list 63. In this manner, the live list 63 is kept updated by maintaining a list of communicatively responsive field devices 38, 40, 42, and 44. In one embodiment, the live list 63 may be advantageously used to maintain consistency of status and alert information, even in circumstances where one or more of the field devices 38, 40, 42, and 44 may have been disconnected, as described in more detail below with respect to FIG. 5.

For scheduling purposes, the LAS 61 may grant permission for each communication occurring over the H1 segments. In some embodiments, only one device (e.g., 38 or 40 and 42 or 44) may actively use each of the H1 segments at a time. Accordingly, the LASs 61 may ensure that each field device 38, 40, 42, and 44 is given time to communicate control data, alarms, etc. through the H1 segments to the controllers 26 and 27.

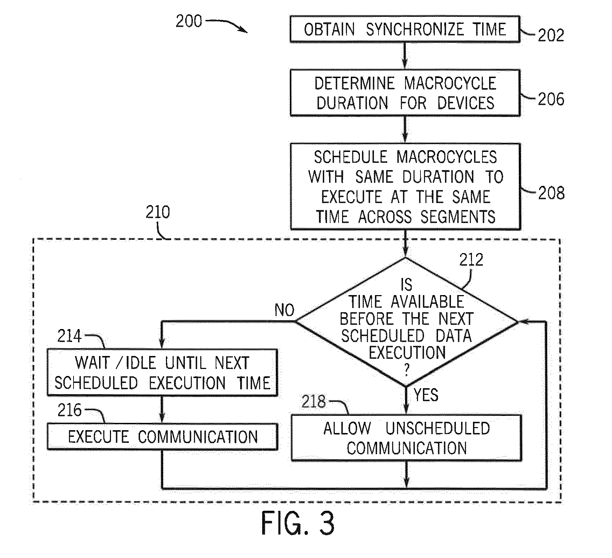

As discussed above, when the macrocycle execution across the various H1 segments is not synchronized, latency may occur, causing less stable control of the control system 10. FIG. 3 illustrates a process for synchronizing macrocycle execution over multiple segments of the control system 10. FIG. 4 illustrates a simplified representation of the control system 10 of FIGS. 1 and 2 to provide a more clear picture of the process 200. For clarity, FIGS. 3 and 4 will be discussed together. The process 200 may be implemented as non-transitory computer readable instructions that instruct one or more processors of the LASs 61.

Execution synchronization may enable the synchronous and asynchronous portions of the macrocycles from different H1 segments 52 to occur at the same time. By providing more precision in macrocycle execution start times, the end times are more predictable. For example, in control systems where the execution is not synchronized across H1 segments 52, the total system response time (e.g., the sum of the control response time, field device sensing time, and control actuation time) may take up to approximately 2.5 macrocycles of elapsed time to occur. On the other hand, when the synchronization techniques described herein are implemented, the worst-case system response time may be 1 macrocycle, resulting in greater stability for the loops controlled by Foundation Fieldbus devices.

As illustrated, to synchronize execution, a synchronized time may be obtained from the control system 10 (block 202 of FIG. 3). For example, the controllers 26 and 27 of FIG. 2 may provide a synchronized time to the LASs 61 on each H1 segment 52. In some embodiments, the synchronized timings may be implemented according to standard timing protocols. In certain embodiments, the precision time protocol (PTP) may be implemented to synchronize the LASs 61 across the entire control system 10. In some embodiments, the timing may be within 20-40 milliseconds of precision amongst the clocks (e.g., the LASs 61) of the control system 10.

To obtain a synchronized time, a controller (e.g., 26 or 27) or other device within the control system 10 may be designated as the grandmaster. The grandmaster is responsible for providing a timing reference 204 (FIG. 4) to clocks in the control system. For example, as discussed above, each H1 segment 52 may include an LAS 61. Each of the LASs 61 may obtain a timing reference 204, which helps ensure that each of the LASs 61 are working off of the same reference time. When determining the synchronization time, the LASs 61 may take into account and compensate for network latency. Thus, when communications between the grandmaster and the clocks are varied between H1 segments 52, the synchronized time may remain consistent between clocks in these H1 segments.

The LASs 61, or other device in the control system 10, may determine the macrocycle execution duration for each of the H1 segments 52 (block 206 of FIG. 3). Each H1 segment executes on a deterministic length of time from the start of the segment. The macrocycle duration may determined based upon function block execution times, transmission times of cyclic messages, gaps between messages determined by network parameter, time reserved for acyclic messages, etc.

After the macrocycle durations have been determined, the LASs 61 may work together to schedule synchronized execution of macrocycles on H1 segments 52 with similar macrocycle durations (block 208 of FIG. 3). For example, each LAS 61 may maintain a link active schedule, which may provide a schedule of times in the macrocycle for devices (e.g., 38, 40, 42, and/or 44) to publish their output values on the Fieldbus. The link active schedules may be coordinated amongst the LASs 61, such that each macrocycle with a common duration will begin execution at the same time, according to the reference timing. For example, if the two H1 segments 52 have similar macrocycle durations (e.g., 320 milliseconds each) the LASs 61 would create a link active schedule that executes these macrocycle executions at approximately the same time (e.g., within 20-40 milliseconds) based upon the synchronization time. If the control system 10 included additional H1 segments with other macrocycle durations (e.g., 640 milliseconds) then the 320 millisecond segments would be scheduled to start at approximately the same time as one another and the 640 millisecond segments would be scheduled to start approximately the same time as one another.

Once the link active schedules have been created by the LASs 61, the LASs 61 may begin granting bus utilization permission in the control system 10 according to the link active schedule (block 210 of FIG. 3). To grant access to the devices 38, 40, 42, and/or 40, according to the link active schedule, the LASs 61 determine whether there may be sufficient time to carry out unscheduled or lower priority items before the next scheduled data execution (decision block 212). When there is not enough time to carry out these items, the LASs 61 may wait or idle until the next schedule execution time occurs (block 214). In some scenarios, one or more idle messages may be provided by the LASs 61, to indicate that the bus has been idled until the proper execution time occurs. This may help to ensure that other devices of control system 10 do not assume that the LASs 61 have failed (e.g., is no longer properly scheduling communications) merely because the LASs 61 are waiting for the proper execution time.

Once the execution time occurs, the scheduled communication is implemented (block 216 of FIG. 3). To facilitate the scheduled communication, the LASs 61 may provide a compel data (CD) token 220 (FIG. 4) to the device (e.g., 38, 40, 42, and/or 44) that is scheduled to have access to the bus at the execution time. Upon receiving the CD token 220, the publishing device immediately sends its data to one or more subscribing devices. From there, the LASs 61 repeat the bus grant process (block 210 of FIG. 3).

When time is available before the next scheduled data execution (according to decision block 212 of FIG. 3), lower priority or unscheduled communications may be enabled by the LASs 61 (block 218). For example, as illustrated in FIG. 4, the LASs 61 may provide a Pass Token (PT) 222 between devices (e.g., 38, 40, 42, and/or 44) of the control system 10, may provide a Time Distribution (TD) 224, and/or may provide a Probe Node (PN) 226. The PT 222 may be provided in a round-robin fashion (e.g., equal sharing in a defined sharing order) between devices on segments 52, to authorized unscheduled activities by these devices. For example, devices 38 and 40 may receive one PT 222 that is shared in a round-robin fashion, while devices 42 and 44 may receive another PT 222 shared in a similar round-robin fashion. The TD 224 may provide a control command to synchronize all clocks of devices (e.g., 38, 40, 42, and/or 44) on an H1 segment 52. The PN 226 may be provided by the LASs 61 on an H1 segment 52 to identify any new devices on the bus. Once the unscheduled or low priority commands are complete, the LASs 61 repeat the bus grant process (block 210 of FIG. 3).

While the bus grant process (block 210) is repeated, additional devices may be connected to the bus or previously connected devices may be removed from the bus. Further, for a multitude of reasons, the active link schedule may change or the clock time of the LASs 61, over time, may diverge from the reference time. Accordingly, the synchronization time may be obtained periodically (e.g., time interval), to ensure that the LASs 61 retain the proper reference time. Further, the macrocycle durations may be determined (block 206) as new devices come online and the scheduling (block 208) may be altered as devices come online or go offline.

As discussed above, many devices within an H1 segment 52 may be capable of fulfilling the LAS 61 functionalities. From time to time, an LAS 61 may fail, creating a need for a new LAS 61 to permit access of the bus to devices of the control system 10. A link master, or non-transitory computer implemented instructions, may instruct a device of the control system 10 to maintain a copy of the link active schedule. The link master may monitor communications on the bus and determine when an LAS 61 fails (e.g., by determining that an LAS 61 has not granted bus access rights to a device for a certain period of time). As discussed above, the LAS 61 may provide an idle notification to the link master, to ensure that there are no false positives regarding the failure determination. When the link master determines no access has been permitted and no idle signal has been provided over a threshold amount time, the link master may assume the scheduling role, activating its copy of the link active schedule for future access grants. When the link master becomes the new LAS 61, it synchronizes its clock with the grandmaster, ensuring that the new LAS 61 executes segments with like macrocycle durations at approximately the same time.

In some embodiments, the execution of controller code relating to fieldbus devices using scheduled macrocycle time may impact the macrocycle duration and/or may limit control capabilities of the system 10 of FIG. 1. FIG. 5 illustrates a macrocycle 250 where execution of controller code relating to fieldbus devices is executed after the scheduled portion of the macrocycle. As discussed above, the macrocycle 250 may include all of the scheduled function block execution in the H1 devices on a segment (portion 252 of the macroblock 250). Further, the macroblock 250 may include an allotment of time for scheduled communications or other functional block executions (portion 254 of the macroblock 250). Additionally, a reserved portion 256 may be used for asynchronous communications, such as alerts and/or downloads).

Execution of controller code relating to the fieldbus devices may be synchronized to occur after the scheduled portion of the macrocycle 250 (e.g., portions 252 and 254). Accordingly, this code may be executed during the reserved portion 256 of the macrocycle 250, as illustrated by block 258. By waiting until after the scheduled portions of the macrocycle 250, inputs from the multiple segments of the system may be collected. This collected input data may enable execution of sometimes complicated control algorithms in the controller, with the ability to update outputs at the start of a succeeding macrocycle, as illustrated by the virtual communications resources (VCRs) 260.

By enabling the controller to take an active role in the execution strategy, extended macrocycle durations may be reduced. For example, in traditional systems, scheduled macrocycle time is used for executing function blocks in the devices. Control strategies that include multiple function blocks in the same device, with VCRs to other devices, may result in longer macrocycle times than the current embodiments that execute controller logic after the schedule portions of the macrocycle 250. Additionally, in contrast to traditional systems that promote control in the field, which are limited by the set of function blocks described in the Fieldbus standard; complicated and/or higher-order control is possible using the restricted function block capability described in the Fieldbus standards.

Technical effects of the invention include maintaining synchronized execution of macrocycles of similar duration across communications segments of a control system. Such synchronized execution approach enables a reduced control system response time by increasing the predictability of execution timing of one segment with regards to alternative segments. Thus, the control system may be able to more accurately and precisely provide control functionality.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An industrial process control system comprising:
   a first link active scheduler configured to operate on a first communications segment while a second link active schedule operates on a second communications segment, wherein the first link active scheduler is configured to schedule a first access time on the first communications segment approximately the same as a second access time on the second communications segment, the first access time relates to a first field device on the first communications segment of the industrial process control system, and the second access time relates to a second field device on the second communications segment of the industrial process control system.
2. The system of clause 1, comprising:
   the first and second field devices, wherein the first and second communications segments are H1 segments of a Foundation Fieldbus industrial process control system, and the first and second field devices are configured to communicatively couple with the first and second H1 segments.
3. The system of clause 1 or clause 2, wherein the first link active scheduler communicates via a Foundation Fieldbus protocol, a HART protocol, or a combination thereof.
4. The system of any preceding clause, comprising:
   the second link active scheduler; and
   a first controller coupled to the first communications segment; and
   a second controller coupled to the second communications segments. wherein the first or second controller is configured to provide a reference time to enable the first and second link active schedulers to schedule macrocycle execution of macrocycles with approximately the same duration at approximately the same time.
5. The system of any preceding clause, wherein the first link active scheduler is configured to synchronize clocks among one or more devices of the industrial process control system by using a precision time protocol.
6. The system of any preceding clause, wherein the first link active scheduler is configured to obtain a synchonization reference time at periodic intervals and synchronize a clock of the first link active scheduler at the periodic intervals based upon the synchronization reference time.
7. The system of any preceding clause, wherein the first link active scheduler is configured to grant bus utilization permission in the industrial process control system based upon a scheduled access time.
8. The system of any preceding clause, comprising a controller configured to act as a grandmaster by providing a clock signal to the first link active scheduler.
9. The system of any preceding clause, wherein the first link active scheduler is configured to execute unscheduled communications or low priority communications when there is sufficient time to execute the unscheduled communications or the low priority communications before a scheduled access time.
10. The system of any preceding clause, comprising a controller configured to execute control algorithms after a scheduled portion of the macrocycles, enabling collection of inputs from multiple communications segments prior to the execution of the control algorithms.
11. The system of any preceding clause, wherein the controller is enabled to implement complicated or higher-order control outside of limitations of a set of function blocks described in the Fieldbus standard..
12. A method, comprising:
   obtaining, via a processor of a device on a first communications segment of an industrial control system, a reference time;
   determining, via the processor, a first macrocycle duration of the first communications segment; and
   scheduling, via the processor, a first macrocycle execution time for a first macrocycle on the first communications segment, wherein the first macrocycle execution time is approximately the same as other macrocycle execution times on other communications segments of the industrial control system when macrocycle durations of the other communications segments are approximately equal to the first macrocycle duration.
13. The method of any preceding clause, comprising:
   determining whether there is time available to allow bus access for low-priority communications, unscheduled communications, or both; and
   allowing access for the low-priority communications, unscheduled communications, or both when there is time available.
14. The method of any preceding clause, wherein allowing access comprises:
   providing a pass token, a time distribution signal, or a probe node signal on the first communications segment.
15. The method of any preceding clause, comprising:
   waiting for the first macrocycle execution time for the first communications segment; and
   executing the first macrocycle at the first macrocycle execution time.
16. The method of any preceding clause, wherein executing the first macrocycle comprises sending a compel data token to the device on the first communications segment.
17. A non-transitory tangible computer-readable medium comprising executable code, the executable code comprising instructions for synchronizing macrocycle execution times across multiple communications segments of an industrial process control system based upon common macrocycle durations of each of the multiple communications segments.
18. The non-transitory tangible computer-readable medium of any preceding clause, wherein the executable code comprises instructions to:
   obtain a reference time from a controller communicatively coupled to one of the multiple communications segments; and
   schedule the macrocycle execution times based upon the reference time.
19. The non-transitory tangible computer-readable medium of any preceding clause, wherein the executable code comprises instructions to synchronize the macrocycle execution times according to the precision time protocol.
20. The non-transitory tangible computer-readable medium of any preceding clause, wherein the executable code comprises instructions to execute macrocycles with approximately the same duration over the multiple communcations segments at approximately the same time, wherein the multiple communications segments comprise Foundation Fieldbus H1 communications segments.

## Claims

1. An industrial process control system (10) comprising:
a first link active scheduler configured to operate on a first communications segment while a second link active schedule operates on a second communications segment, wherein the first link active scheduler is configured to schedule a first access time on the first communications segment approximately the same as a second access time on the second communications segment, the first access time relates to a first field device on the first communications segment of the industrial process control system, and the second access time relates to a second field device on the second communications segment of the industrial process control system.

2. The system of claim 1, comprising:
the first and second field devices, wherein the first and second communications segments are H1 segments of a Foundation Fieldbus industrial process control system, and the first and second field devices are configured to communicatively couple with the first and second H1 segments.

3. The system of claim 1 or claim 2, wherein the first link active scheduler communicates via a Foundation Fieldbus protocol, a HART protocol, or a combination thereof.

4. The system of any preceding claim, comprising:
the second link active scheduler; and
a first controller coupled to the first communications segment; and
a second controller coupled to the second communications segments. wherein the first or second controller is configured to provide a reference time to enable the first and second link active schedulers to schedule macrocycle execution of macrocycles with approximately the same duration at approximately the same time.

5. The system of any preceding claim, wherein the first link active scheduler is configured to synchronize clocks among one or more devices of the industrial process control system by using a precision time protocol.

6. The system of any preceding claim, wherein the first link active scheduler is configured to obtain a synchonization reference time at periodic intervals and synchronize a clock of the first link active scheduler at the periodic intervals based upon the synchronization reference time.

7. The system of any preceding claim, wherein the first link active scheduler is configured to grant bus utilization permission in the industrial process control system based upon a scheduled access time.

8. The system of any preceding claim, comprising a controller configured to act as a grandmaster by providing a clock signal to the first link active scheduler.

9. The system of any preceding claim, wherein the first link active scheduler is configured to execute unscheduled communications or low priority communications when there is sufficient time to execute the unscheduled communications or the low priority communications before a scheduled access time.

10. The system of any preceding claim, comprising a controller configured to execute control algorithms after a scheduled portion of the macrocycles, enabling collection of inputs from multiple communications segments prior to the execution of the control algorithms.

11. The system of any preceding claim, wherein the controller is enabled to implement complicated or higher-order control outside of limitations of a set of function blocks described in the Fieldbus standard..

12. A method, comprising:
obtaining, via a processor of a device on a first communications segment of an industrial control system, a reference time;
determining, via the processor, a first macrocycle duration of the first communications segment; and
scheduling, via the processor, a first macrocycle execution time for a first macrocycle on the first communications segment, wherein the first macrocycle execution time is approximately the same as other macrocycle execution times on other communications segments of the industrial control system when macrocycle durations of the other communications segments are approximately equal to the first macrocycle duration.

13. The method of claim 12, comprising:
determining whether there is time available to allow bus access for low-priority communications, unscheduled communications, or both; and
allowing access for the low-priority communications, unscheduled communications, or both when there is time available.

14. A non-transitory tangible computer-readable medium comprising executable code, the executable code comprising instructions for synchronizing macrocycle execution times across multiple communications segments of an industrial process control system based upon common macrocycle durations of each of the multiple communications segments.

15. The medium according to claim 14, arranged to perform the method of claim 12 or claim 13.
